# EUROPÄISCHE PATENTSCHRIFT

(11) **EP 0 984 874 B1**
(45) Veröffentlichungstag und Bekanntmachung des Hinweises auf die Patenterteilung: **04.06.2003**
(21) Anmeldenummer: 99924687.9
(22) Anmeldetag: 26.03.1999
(51) Int. Cl.: B60R 16/02

(54) **VERFAHREN UND VORRICHTUNG ZUR ERZEUGUNG EINES FEHLERSIGNALS BEI EINEM KRAFTFAHRZEUG**
METHOD AND DEVICE FOR GENERATING AN ERROR SIGNAL IN A VEHICLE
PROCEDE ET DISPOSITIF PERMETTANT DE PRODUIRE UN SIGNAL D'ERREUR DANS UN VEHICULE

(30) Priorität: 01.04.1998 DE 19814482
(43) Veröffentlichungstag der Anmeldung: 15.03.2000
(73) Patentinhaber: ROBERT BOSCH GMBH, 70442 Stuttgart (DE)
(72) Erfinder: BÄUERLE, Michael, D-71706 Markgröningen (DE); RIES-MÜLLER, Klaus, D-74906 Bad Rappenau (DE)
(86) Internationale Anmeldenummer: DE9900912
(87) Internationale Veröffentlichungsnummer: WO99050094

(56) Entgegenhaltungen:
- DE-A- 4 339 570
- DE-A- 19 510 522
- DE-A- 19 510 525
- US-A- 5 542 756

## Beschreibung

### Stand der Technik

Die Erfindung geht aus von einem Verfahren beziehungsweise einer Vorrichtung zur Erzeugung eines Fehlersignals in einem Kraftfahrzeug.

In heutigen Fahrzeugen werden die Bremsleuchten im allgemeinen in Abhängigkeit von einer Bremspedalbetätigung angesteuert. Hierzu wird üblicherweise durch das vom Fahrer des Fahrzeugs zu bedienende Bremspedal ein Bremsschalter aktiviert. Die Stellung dieses Schalters signalisiert eines Bremsbetätigung und kann neben der Bremslichtansteuerung auch beispielsweise zur Motor- und/oder Getriebesteuerung herangezogen werden. Ein Defekt eines solchen Bremsschalters muß möglichst frühzeitig und sicher erkannt werden, da im Falle eines defekten Bremsschalters unter Umständen unterschiedliche Funktionen im Fahrzeug nicht ordnungsgemäß ablaufen.

Ein Verfahren und eine Vorrichtung zur Steuerung bzw. Regelung der Bremsanlage eines Fahrzeugs mit einer Fehlerzustandserfassung ist aus der DE 195 10 525 A1 bekannt, bei dem beziehungsweise der eine Bremspedalbetätigung über unterschiedliche Meßeinrichtungen und ein die Pedalbetätigung charakterisierendes Signal erfaßt werden. Als weitere Einflußgrößen werden unter anderem das Bremsmoment und die Fahrzeugverzögerung genannt. Zwei unabhängig voneinander arbeitende Mikrorechner verarbeiten die Pedalbetätigungsgrößen zur Fehlererkennung und Bremswunsch- bzw. Sollwertbestimmung, sodaß jedem Mikrorechner mindestens drei Berechnungsergebnisse bezüglich Fehlerzustand und / oder Sollwert bzw. Bremswunsch vorliegen.

Die Aufgabe der vorliegenden Erfindung besteht darin, in einfacher Weise ein Fehlersignal, das einen Defekt eines solchen Bremsschalters anzeigt, zu erzeugen.

Diese Aufgabe wird durch die Merkmale der unabhängigen Ansprüche 1 und 8 gelöst.

### Vorteile der Erfindung

Wie schon erwähnt geht die Erfindung aus von einem Verfahren beziehungsweise einer Vorrichtung zur Erzeugung eines Fehlersignals in einem Kraftfahrzeug. Das Fahrzeug weist dabei einen Antriebsmotor sowie ein vom Fahrer des Fahrzeugs betätigbares Betätigungsmittel, mittels dem ein Bremssystem aktiviert wird, auf. Weiterhin sind Erfassungsmittel vorgesehen, mittels der eine Betätigung der Betätigungsmittel erkannt wird. Der Kern der Erfindung besteht darin, daß eine Radschleppmomentengröße ermittelt wird, die das durch den Motor an den Fahrzeugrädern bewirkte Schleppmoment repräsentiert. Darüber hinaus wird eine Verzögerungsgröße ermittelt, die die Längsverzögerung des Fahrzeugs repräsentiert. Weiterhin wird eine den Betriebszustand der Betätigungsmittel repräsentierende Bremsgröße ermittelt. Das Fehlersignal wird dann in Abhängigkeit von der ermittelten Schleppmomentengröße, der ermittelten Verzögerungsgröße und der ermittelten Bremsgröße erzeugt.

Der Kern der Erfindung besteht also darin, daß aus der Interpretation der Längsdynamik, beispielsweise ermittelt aus den Raddrehzahlen, dem Radschleppmoment, beispielsweise ermittelt durch das Motorschleppmoment und der Getriebeübersetzung, eine Überwachung des Bremsschalters erreicht wird. Durch die Erfindung ist eine Diagnose des sicherheitsrelevanten Bremsschalters ohne einen zusätzlichen Hardwareaufwand möglich.

Wie erwähnt kann dabei vorgesehen sein, daß die Betätigungs mittel als Bremspedal und die Erfassungsmittel als Bremsschalter, mittels dem eine Betätigung des Bremspedals erkannt wird, ausgebildet sind.

Besonders vorteilhaft ist es, daß das Fehlersignal den ordnungsgemäßen beziehungsweise den nicht ordnungsgemäßen Zustand der Erfassungsmittel repräsentiert und weiterhin Anzeigemittel vorgesehen sind, die auf das erzeugte Fehlersignal hin ihren Betriebszustand ändern.

In einer vorteilhaften Ausgestaltung der Erfindung ist vorgesehen, daß eine Motorschleppmomentengröße ermittelt wird, die das Motorschleppmoment repräsentiert, und eine Getriebeübersetzungsgröße ermittelt wird, die die momentan eingestellte Getriebeübersetzung zwischen dem Fahrzeugmotor und den angetriebenen Fahrzeugrädern repräsentiert. Die Radschleppmomentengröße wird dann abhängig von der ermittelten Motorschleppmomentengröße und der ermittelten Getriebeübersetzungsgröße ermittelt.

In einer besonders vorteilhaften Ausgestaltung der Erfindung ist vorgesehen, daß das Fehlersignal den ordnungsgemäßen beziehungsweise den nicht ordnungsgemäßen Zustand der Erfassungsmittel repräsentiert, und die ermittelte Verzögerungsgröße mit einem ersten vorgebbaren Schwellwert und die ermittelte Radschleppmomentengröße mit einem zweiten vorgebbaren Schwellwert verglichen wird. Das Fehlersignal wird dann im Sinne eines nicht ordnungsgemäßen Zustands erzeugt, wenn
- die ermittelte Verzögerungsgröße den ersten Schwellwert überschreitet und
- die ermittelte Radschleppmomentengröße den zweiten Schwellwert unterschreitet und
- die ermittelte Bremsgröße den Betriebszustand der Betätigungsmittel repräsentiert, in dem keine Betätigung der Betätigungsmittel erkannt wird.

Zur Ermittlung der Verzögerungsgröße werden vorzugsweise die Raddrehzahlen der Fahrzeugräder und/oder die Fahrzeuglängsbeschleunigung erfaßt.

Weiterhin kann vorgesehen sein, daß zur Erzeugung des Fehlersignals ein den Betriebszustand einer im Antriebsstrang des Fahrzeugs angeordneten Kupplung repräsentierendes Signal berücksichtigt wird. Insbesondere soll die Erzeugung des Fehlersignals nur bei geschlossener Kupplung geschehen.

Weitere vorteilhafte Ausgestaltungen sind den Unteransprüchen zu entnehmen.

### Zeichnungen

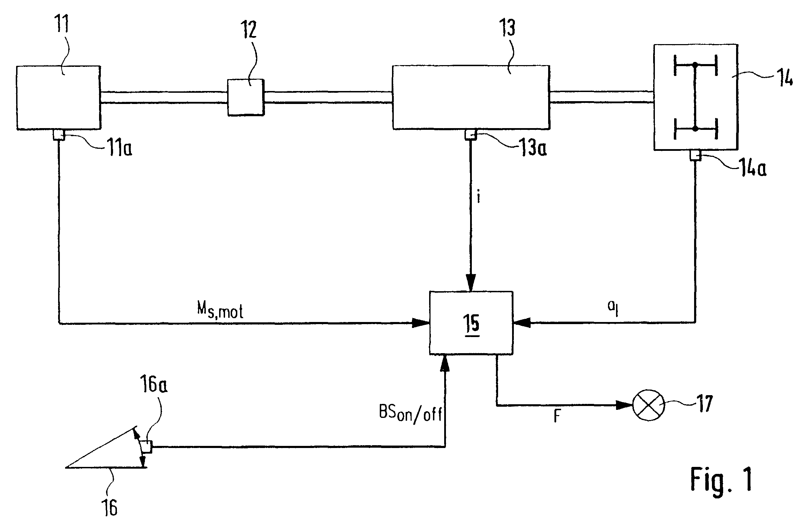

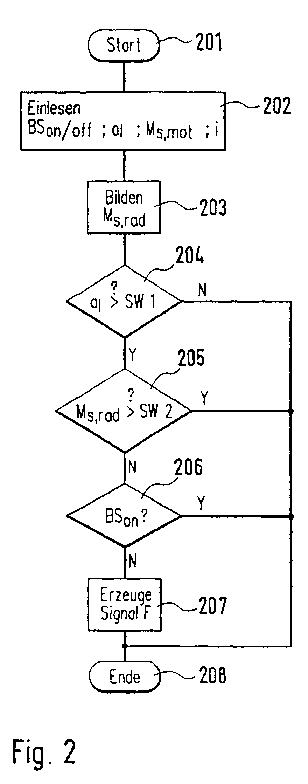

Die Figuren zeigen ein Ausführungsbeispiel der Erfindung anhand eines in der Figur 1 dargestellten Blockschaltbildes und eines anhand der Figur 2 dargestellten Ablaufdiagramms.

### Ausführungsbeispiel

Im folgenden soll die Erfindung anhand eines Ausführungsbeispiels dargestellt werden.

Die Figur 1 zeigt mit dem Bezugszeichen 11 einen Fahrzeugmotor, dessen Funktionen durch das Motorsteuergerät 11a gesteuert beziehungsweise geregelt werden. In dem Motorsteuergerät 11a liegt das momentan ausgangsseitig des Motors 11 vorliegende Motormoment, speziell das Motorschleppmoment M_{s, mot}, vor und wird der Steuereinheit 15 zugeführt.

Der Motor 11 ist über eine Kupplung und/oder einen Drehmomentenwandler 12 über das Getriebe 13 mit den Antriebsrädern. des Fahrzeugs 14 verbunden. Die Funktionen des Getriebes werden durch das Getriebesteuergerät 13a gesteuert beziehungsweise geregelt. In dem Getriebesteuergerät 13a liegt im allgemeinen die momentan eingestellte Getriebeübersetzung i vor, die der Steuereinheit 15 zugeführt wird.

Die Längsbeschleunigung a₁ des Fahrzeugs wird mittels des Sensors 14a erfaßt und der Steuereinheit zugeführt.

Die Betätigung des vom Fahrer des Fahrzeugs betätigbaren Bremspedals 16 wird durch den Bremsschalter 16a erfaßt. Die Stellung (BSₒₙ oder BS_{off}) des Bremsschalters 16a wird der Steuereinheit 15 zugeführt. Das Signal BS_{on/off} des Bremsschalters 16a wird im allgemeinen standardmäßig von modernen Motorsteuergeräten eingelesen. Abhängig von den Eingangssignalen bildet die Steuereinheit 15 das Fehlersignal F, das zur Ansteuerung einer Fehlerleuchte 17 dient. Dies wird anhand der Figur 2 noch genauer gezeigt werden.

Die in der Figur 1 dargestellte Aufteilung zwischen Motorsteuergerät 11a, Getriebesteuergerät 13a und Steuereinheit 15 ist dabei nur wegen der besseren Übersichtlichkeit gewählt. Es können aber auch Funktionen der genannten einzelnen Steuergeräte in dem jeweils anderen Steuergeräten ablaufen. So kann beispielsweise vorgesehen sein, daß insbesondere die Steuereinheit 15 und das Motorsteuergerät 11a zu einer Einheit zusammengefaßt ist. Die Getriebeübersetzung kann auch im Motorsteuergerät beziehungsweise in dem zusammengefaßten Steuergerät, beispielsweise durch eine einfache Auswertung der Motor- und Getriebeausgangsdrehzahl ermittelt werden. Die Längsbeschleunigung kann beispielsweise durch die Getriebeausgangsdrehzahl beziehungsweise die Raddrehzahlen durch Differenzieren ermittelt werden.

Nach dem in der Figur 2 gezeigten Startschritt 201 werden im Schritt 202 die erwähnten Eingangssignale, die Stellung BSon/off, die momentane Fahrzeuglängsbeschleunigung a₁, das momentane Motorschleppmoment M_{s,mot} sowie die momentan eingestellte Getriebeübersetzung i eingelesen. Im Schritt 203 wird aus der dem Motorschleppmoment M_{s, mot} und der Getriebeübersetzung das an den Antriebsrädern wirkende Radschleppmoment M_{s, rad} gebildet.

Folgende Ursachen können zu einer Fahrzeugverzögerung führen:
1. Eine Steigung im Fahrbahnverlauf (Bergauffahrt) kann durch die Überwindung des Höhenunterschiedes zu einer Fahrzeugverzögerung führen.
2.Ein Gangwechsel, speziell ein Rückschaltvorgang, kann zu einer Fahrzeugverzögerung führen.
3.Nimmt der Fahrer des Fahrzeugs durch das Fahrpedal das Motormoment zurück, so kann es hierdurch zu einer Fahrzeuglängsverzögerung kommen.
4.Eine Bremsbetätigung führt zu einer Fahrzeugverzögerung.

Erfindungsgemäß wird die Stellung des Bremsschalters 16a (Signal BSₒₙ/_{off}) mit bestimmten Größen zur Diagnose verglichen. Hierbei müssen die oben genannten Fälle 1 bis 3, in denen eine Fahrzeugverzögerung nicht durch eine Bremsbetätigung verursacht wird, ausgeschlossen werden.

Eine Unterscheidung zwischen den Fällen 1. und 4. kann durch einen Vergleich 204 der Fahrzeug- bzw. Radbeschleunigung a₁ mit einem Schwellwert SW1 erreicht werden. Eine große Fahrzeugverzögerung (Abfrageergebnis "Y" im Schritt 204) kann mit hoher Wahrscheinlichkeit nur durch enen Bremseingriff verursacht werden.

Die Fälle 2. und 3. können durch einen Vergleich 205 des momentanen Radschleppmoments M_{s,rad} mit einem Schwellwert SW2 erkannt werden. Ist das Radschleppmoment MS,rad hinreichend groß (Abfrageergebnis "Y" im Schritt 205), so sollte sicherheitshalber die erfindungsgemäße Erzeugung des Fehlersignals F nicht getätigt werden. Ist aber die Fahrzeuglängsverzögerung hinreichend groß und das Radschleppmoment M_{s,rad} hinreichend gering, so muß eine Bremsbetätigung vorliegen und der Bremsschalter 16a das Signals BSₒₙ abgeben. Dies wird im Schritt 206 überprüft. Ist dies der Fall, so wird direkt zum Endschritt 208 übergegangen. Ist dies jedoch nicht der Fall, so ist der Bremsschalter 16a defekt, was durch die Erzeugung des Fehlersignals F durch die Anzeigemittel 17 zur Anzeige gebracht wird.

Nach dem Endschritt 208 wird der in der Figur 2 gezeigte Ablauf erneut gestartet.

## Patentansprüche

1. Verfahren zur Erzeugung eines Fehlersignals (F) in einem Kraftfahrzeug mit einem das Fahrzeug antreibenden Fahrzeugmotor (11), einem vom Fahrer des Fahrzeugs betätigbaren Betätigungsmittel (16), mittels dem ein Bremssystem aktiviert wird, und Erfassungsmitteln (16a), mittels der eine Betätigung der Betätigungsmittel (16) erkannt wird, wobei
- eine Radschleppmomentengröße (M_{s,rad}) ermittelt wird, die das durch den Motor (11) an den Fahrzeugrädern bewirkte Schleppmoment repräsentiert,
- eine Verzögerungsgröße (a1) ermittelt wird, die die Längsverzögerung des Fahrzeugs repräsentiert,
- eine den Betriebszustand der Betätigungsmittel (16a) repräsentierende Bremsgröße (BS_{on/off}) ermittelt wird,
- das Fehlersignal (F) in Abhängigkeit von der ermittelten Schleppmomentengröße (M_{s, mot}), der ermittelten Verzögerungsgröße (al) und der ermittelten Bremsgröße (BS_{on/off}) erzeugt wird.

2. Verfahren nach Anspruch 1, **dadurch gekennzeichnet, daß** die Betätigungsmittel als Bremspedal (16) und die Erfassungsmittel als Bremsschalter (16a), mittels dem eine Betätigung des Bremspedals erkannt wird, ausgebildet sind.

3. Verfahren nach Anspruch 1, **dadurch gekennzeichnet, daß** das Fehlersignal (F) den ordnungsgemäßen beziehungsweise den nicht ordnungsgemäßen Zustand der Erfassungsmittel (16a) repräsentiert und weiterhin Anzeigemittel (17) vorgesehen sind, die auf das erzeugte Fehlersignal (F) hin ihren Betriebszustand ändern.

4. Verfahren nach Anspruch 1, **dadurch gekennzeichnet, daß**
- eine Motorschleppmomentengröße (M_{s,mot}) ermittelt wird, die das Motorschleppmoment repräsentiert, und
- eine Getriebeübersetzungsgröße (i) ermittelt wird, die die momentan eingestellte Getriebeübersetzung zwischen dem Fahrzeugmotor und den angetriebenen Fahrzeugrädern repräsentiert, und
- die Radschleppmomentengröße (M_{s, rad}) abhängig von der ermittelten Motorschleppmomentengröße (M_{s, mot}) und der ermittelten Getriebeübersetzungsgröße (i) ermittelt wird.

5. Verfahren nach Anspruch 1, **dadurch gekennzeichnet, daß** das Fehlersignal (F) den ordnungsgemäßen beziehungsweise den nicht ordnungsgemäßen Zustand der Erfassungsmittel (16a) repräsentiert, und die ermittelte Verzögerungsgröße (al) mit einem ersten vorgebbaren Schwellwert (SW1) und die ermittelte Radschleppmomentengröße (M_{s, rad}) mit einem zweiten vorgebbaren Schwellwert (SW2) verglichen wird und das Fehlersignal (F) im Sinne eines nicht ordnungsgemäßen Zustands erzeugt wird, wenn
- die ermittelte Verzögerungsgröße (a1) den ersten Schwellwert (SW1) überschreitet und
- die ermittelte Radschleppmomentengröße (M_{s,rad}) den zweiten Schwellwert (SW2) unterschreitet und
- die ermittelte Bremsgröße (BS_{on/off}) den Betriebszustand der Betätigungsmittel (16a) repräsentiert, in dem keine Betätigung der Betätigungsmittel (16) erkannt wird.

6. Verfahren nach Anspruch 1, **dadurch gekennzeichnet, daß** zur Ermittlung der Verzögerungsgröße (a1) die Raddrehzahlen der Fahrzeugräder und/oder die Fahrzeuglängsbeschleunigung erfaßt werden.

7. Verfahren nach Anspruch 1, **dadurch gekennzeichnet, daß** zur Erzeugung des Fehlersignals (F) weiterhin ein den Betriebszustand einer im Antriebsstrang des Fahrzeugs angeordneten Kupplung repräsentierendes Signal berücksichtigt wird.

8. Vorrichtung zur Erzeugung eines Fehlersignals (F) in einem Kraftfahrzeug mit einem das Fahrzeug antreibenden Fahrzeugmotor (11), einem vom Fahrer des Fahrzeugs betätigbaren, ein Bremssystem aktivierenden Betätigungsmittel (16) und eine Betätigung der Betätigungsmittel (16) erkennenden Erfassungsmitteln (16a), wobei Mittel (15) vorgesehen sind, die
- eine Radschleppmomentengröße (M_{s, rad}) ermitteln, die das durch den Motor (11) an den Fahrzeugrädern bewirkte **Schleppmoment repräsentiert,**
- eine Verzögerungsgröße (a1) ermitteln, die die Längsverzögerung des Fahrzeugs repräsentiert,
- eine den Betriebszustand der Betätigungsmittel (16a) repräsentierende Bremsgröße (BSₒₙ/_{off}) ermitteln,
- das Fehlersignal (F) in Abhängigkeit von der ermittelten Schleppmomentengröße (M_{s, mot}), der ermittelten Verzögerungsgröße (a1) und der ermittelten Bremsgröße (BS_{on/off}) erzeugen.

9. Vorrichtung nach Anspruch 7, **dadurch gekennzeichnet, daß** ein Motorsteuergerät (11a) vorgesehen ist, das den Motor abhängig von in dem Steuergerät vorliegenden Daten steuert oder regelt, und die Mittel (15) mit dem Motorsteuergerät (11a) eine Einheit bilden.

## Claims

1. Method for generating a fault signal (F) in a motor vehicle having a vehicle engine (11) which drives the vehicle, an actuation means (16) which can be actuated by the driver of the vehicle and by means of which a brake system is activated, and sensing means (16a) by means of which actuation of the actuation means (16) is detected,
- a wheel slip torque variable (Mₛ,_{wheel}) being determined which represents the slip torque brought about at the vehicle wheels by the engine (11),
- a deceleration variable (a1) which represents the longitudinal deceleration of the vehicle being determined,
- a brake variable (BS_{on/off}) which represents the operating state of the actuation means (16a) being determined,
- the error signal (F) being generated as a function of the determined slip torque variable (M_{s, eng}), the determined deceleration variable (al) and the determined brake variable (BS_{on/off}).

2. Method according to Claim 1, **characterized in that** the actuation means are embodied as a brake pedal (16) and the sensing means are embodied as a brake switch (16a) by means of which actuation of the brake pedal is detected.

3. Method according to Claim 1, **characterized in that** the error signal (F) represents the satisfactory or the non-satisfactory state of the sensing means (16a) and in addition display means (17), which change their operating state in response to the generated error signal (F), are provided.

4. Method according to Claim 1, **characterized in that**
- an engine slip torque variable (M_{s,eng}) which represents the engine slip torque is determined, and
- a gearbox transmission ratio variable (i) is determined which represents the instantaneously set gearbox transmission ratio between the vehicle engine and the driven vehicle wheels, and
- the wheel slip torque variable (M_{s, wheel}) is determined as a function of the determined engine slip torque variable (M_{s, eng}) and the determined gearbox transmission ratio variable (i).

5. Method according to Claim 1, **characterized in that** the error signal (F) represents the satisfactory or the non-satisfactory state of the sensing means (16a), and the determined deceleration variable (al) is compared with a first predefinable threshold value (SW1), and the determined wheel slip torque variable (M_{s,wheel}) is compared with a second predefinable threshold value (SW2), and the error signal (F) is generated in the sense of a non-satisfactory state if
- the determined deceleration variable (a1) exceeds the first threshold value (SW1), and
- the determined wheel slip torque variable (Ms,wheel) drops below the second threshold variable (SW2), and
- the determined brake variable (BSₒₙ/_{off}) represents the operating state of the actuation means (16a) in which no actuation of the actuation means (16) is detected.

6. Method according to Claim 1, **characterized in that**, in order to determine the deceleration variable (al), the wheel speeds of the vehicle wheels and/or the vehicle longitudinal acceleration are sensed.

7. Method according to Claim 1, **characterized in that**, in order to generate the error signal (F), a signal which represents the operating state of a clutch which is arranged in the drive train of the vehicle is taken into account.

8. Device for generating an error signal (F) in a motor vehicle having a vehicle engine (11) which drives the vehicle, an actuation means (16) which can be actuated by the driver of the vehicle and activates a brake system, and sensing means (16a) which detect actuation of the actuation means (16), means (15) being provided which
- determine a wheel slip torque variable (Mₛ,_{wheel}) which represents the slip torque brought about at the vehicle wheels by the engine (11),
- determine a deceleration variable (a1) which represents the longitudinal deceleration of the vehicle,
- determine a brake variable (BSₒₙ/_{off}) which represents the operating state of the actuation means (16a),
- generate the error signal (F) as a function of the determined slip torque variable (M_{s, eng}), the determined deceleration variable (al) and the determined brake variable (BSₒₙ/_{off}).

9. Device according to Claim 7, **characterized in that** an engine controller (11a) is provided which controls or regulates the engine as a function of data present in the controller, and the means (15), together with the engine controller (11a), form one unit.

## Revendications

1. Procédé pour générer un signal de défaut (F) dans un véhicule automobile équipé d'un moteur (11) qui l'entraîne, d'un moyen d'actionnement (16) actionné par le conducteur du véhicule qui active un système de freinage ainsi que des moyens de saisie (16a) reconnaissant l'actionnement du moyen d'actionnement (16), dans lequel :
- on détermine une grandeur de couple de roue (Mₛ, roue), qui représente le couple de traction appliqué par le moteur (11) aux roues du véhicule,
- on détermine une grandeur de décélération (a1) représentant la décélération longitudinale du véhicule,
- on détermine une grandeur de freinage (BS_{marche/arrêt}), représentant l'état de fonctionnement du moyen d'actionnement (16a),
- on génère le signal de défaut (F) en fonction de la grandeur du couple de traction obtenu (M_{s, mot}) de la grandeur de décélération déterminée (al) et de la grandeur de freinage déterminée (BS_{marche/arrêt}).

2. Procédé selon la revendication 1,
**caractérisé en ce que**
le moyen d'actionnement est réalisé comme pédale de frein (16) et le moyen de saisie comme interrupteur de frein (16a) qui détecte un actionnement de la pédale de frein.

3. Procédé selon la revendication 1,
**caractérisé en ce que**
le signal de défaut (F) représente l'état normal ou anormal du moyen de saisie (16a) et en outre on a des moyens d'affichage (17) qui changent leur état de fonctionnement suivant le signal de défaut (F) généré.

4. Procédé selon la revendication 1,
**caractérisé en ce qu'**
- on détermine une grandeur de coupe de traction du moteur (M_{s, mot}), représentant le couple de traction moteur et
- on détermine une grandeur de démultiplication de transmission (i) qui représente le rapport de transmission instantanément réglé entre le moteur du véhicule et les roues motrices du véhicule et
- on détermine la grandeur du couple de traction (Mₛ, roue) en fonction de la grandeur du couple de traction moteur, obtenue [M_{s, mot}) et on détermine la grandeur de rapport de transmission (i).

5. Procédé selon la revendication 1,
**caractérisé en ce que**
le signal de défaut (F) représente l'état normal ou anormal du moyen de saisie (16a) et la grandeur de décélération obtenue (al) est comparée à un premier seuil prédéterminé (SW1) et la grandeur de couple de traction de roue, déterminée (M_{s,} roue) est comparée à un second seuil prédéterminé (SW2) et on génère le signal de défaut (F) dans le sens d'un état anormal si :
- la grandeur de décélération obtenue (a1) dépasse la première valeur de seuil (SW1) et
- la grandeur de couple de traction de roue déterminée (M_{s,} roue) passe en dessous du second seuil (SW2) et
- la grandeur de freinage obtenue (BS_{marche/arrêt}) représente l'état de fonctionnement du moyen d'actionnement (16a) dans lequel aucun actionnement du moyen d'actionnement (16) n'a été détecté.

6. Procédé selon la revendication 1,
**caractérisé en ce que**
pour déterminer la grandeur de décélération (a1) on saisit la vitesse de rotation des roues du véhicule et/ou l'accélération longitudinale du véhicule.

7. Procédé selon la revendication 1,
**caractérisé en ce que**
pour générer le signal de défaut (F) on tient en outre compte d'un signal représentant l'état de fonctionnement de l'embrayage de la ligne de transmission du véhicule.

8. Dispositif pour générer un signal de défaut (F) dans un véhicule comportant un moteur (11) qui l'entraîne, un moyen d'actionnement (16) activant un système de freinage et commandé par le conducteur du véhicule, et des moyens de saisie (16a) reconnaissant l'actionnement du moyen d'actionnement (16), avec des moyens (15) prévus pour
- déterminer une grandeur de moment de traction de roue (M_{s,} roue) qui représente le couple de traction produit par le moteur (11) au niveau des roues du véhicule,
- déterminer une grandeur de décélération (a1) représentant la décélération longitudinale du véhicule,
- déterminer une grandeur de freinage (BS_{marche/arrêt}) représentant l'état de fonctionnement des moyens d'actionnement (16a), et
- générer le signal de défaut (F) en fonction de la grandeur de couple de traction déterminée (Mₛ, ₘₒₜ), de la grandeur de décélération déterminée (a1) et de la grandeur de freinage déterminée (BS_{marche/arrêt}).

9. Dispositif selon la revendication 7,
**caractérisé par**
un appareil de commande de moteur (11a) qui commande ou régule le moteur en fonction de données dans l'appareil de commande et les moyens (15) forment un ensemble avec l'appareil de commande du moteur (11a).
